# EUROPEAN PATENT SPECIFICATION

(11) **EP 2 044 713 B1**
(45) Date of publication and mention of the grant of the patent: **14.01.2015**
(21) Application number: 06769652.6
(22) Date of filing: 25.07.2006
(51) Int. Cl.: H04L 1/00, H04N 7/24, H04L 29/06, H04N 21/2343, H04N 21/435, H04N 21/643, H04N 19/40, H04N 21/235, H04N 21/2662

(54) **METHOD AND DEVICE FOR STREAM ADAPTATION**
VERFAHREN UND EINRICHTUNG ZUR STREAM-ANPASSUNG
PROCÉDÉ ET DISPOSITIF D'ADAPTATION DE FLUX

(43) Date of publication of application: 08.04.2009
(73) Proprietor: Telefonaktiebolaget LM Ericsson (publ), 164 83 Stockholm (SE)
(72) Inventor: TROJER, Elmar, SE-187 37 TÄBY (SE)
(74) Representative: Brann AB
(86) International application number: PCT/SE2006/050272
(87) International publication number: WO 2008/013484

(56) References cited:
- EP-A1- 1 580 914
- US-A1- 2005 008 074
- US-A1- 2006 150 055
- CURRAN K. AND ANNESLEY S.: 'Transcoding media for bandwidth constrained mobile devices' March 2005 - April 2005, pages 75 - 79, XP003012352

## Description

The present invention relates to a method and a device for adapting the rates by which one or more video, audio or data channels are streamed to a user over a bandwidth limited transport medium (local loop). The rates by which the program channels are streamed are adapted to the quality of the transport media in terms of bandwidth. The invention also relates to a network node that provides the adaptation method.

### TECHNICAL FIELD OF THE INVENTION

The invention pertains to distribution of TV (IPTV) and video on demand (VoD) using the Internet Protocol stack as carrier of the service. In general, the invention copes with the transport of data streams over bandwidth limited media where the available data-rate is scarce.

### BACKGROUND

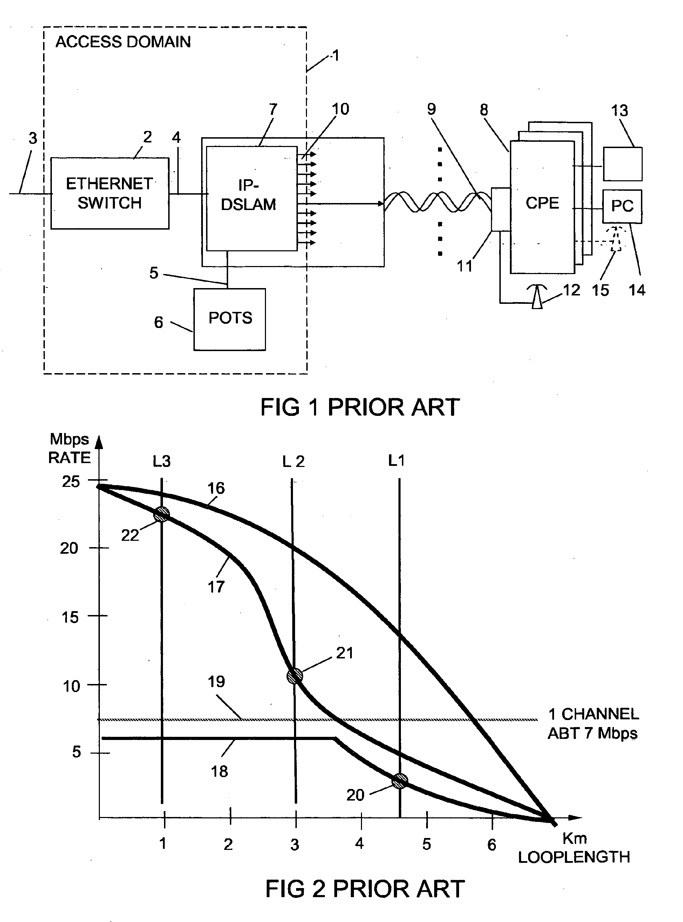

Fig. 1 illustrates an access domain 1 with an Ethernet switch 2 with a link 3 over which data material, such as video, audio or data, is transported from a non-shown IP based service network using Ethernet or IP based transmission technology. POTS (Plain Old Telephony Service) services from a POTS domain 6 are transported over a link 5. Signals on the two links 4 and 5 are multiplexed together in a non shown combiner of an IPDSLAM (IP Digital Subscriber Line Access Multiplexer) 7 and are transported to a plurality of CPEs (Customer Premises Equipments) 8 over respective DSLs (Digital Subscriber Lines) 9. The IPDSLAM has a plurality of connectors 10 each connected to a respective DSL. For clarity reasons only one connector, one DSL and one CPE are shown. The shown CPE sits in the premises of a non shown user. Typically 8, 10 or 12 different CPEs are connected to one and the same IPDSLAM over respective DSLs as symbolically illustrated at the vertical line of dots. A CPE comprises a splitter 11 that splits the two signals on the DSL into a POTS signal and a DSL signal. The POTS signal goes to a telephone 12. The DSL signal goes to a set top box 13 to which a not shown TV or video equipment is connected. Depending on the CPE, the DSL signal may also go to a PC 14 and a VoIP (Voice over IP) telephone 15.

The Ethernet switch 2 has control functions for the IPDSLAM allowing users connected to the IPDSLAM to send individual requests for individual programs to a non shown content server placed in the content provider domain. As an alternative, the video or content server can be directly connected to the Ethernet switch 2.

An IPDSLAM is provided with means that monitors the quality of the DSL. An IPDSLAM is also provided with a functionality called impulse noise protection (INP) that comes into action when there is impulse noise, for example electrical noise in or in the surroundings of a user's premises. The INP functionality reduces the effects of the noise, but degrades the transmission rate.

The length of a DSL depends of the distance between geographical location of the CPE and the IPDSLAM. This distance is commonly referred to as the loop length. An IPDSLAM is typically located at a CO (central office) of a network operator or in an outdoor cabinet.

Fig. 2 Ilustrates how the transmission rate on an individual DSL varies with the loop length. Curve 16 is an ideal curve obtained with the standard ADSL2+ transmission mode, [Ref 1]., where no noise is on the local loop. Curve 17 illustrates how cross talk from other DSLs connected to the same IPDSLAM and placed in the same binder (bundle of lines) degrades the transmission rate on an individual DSL. Curve 18 illustrates how INP degrades the transmission rate on an individual DSL in case of impulse noise degradation. Vertical lines L1, L2 and L3 are three different DSLs with different loop lengths.

L1 is a long DSL that goes to a user located about 4,5 km from the IPDSLAM 7, L2 is a medium long DSL to another user at a distance of 3 km from the same IPDSLAM and L3 is a short DSL to yet another user at a short distance of 1 km from the same IPDSLAM.

The maximum point of curve 16 has been calculated for the case where the IPDSLAM is connected directly to the CPE not using any DSL. At zero distance there is a theoretical figure of a maximum transmission rate of 24 Mbps in the downstream direction (for ADSL2+). The curve is then falling with increasing distance between the IPDSLAM and the CPE and at 7 km no transmission is possible.

An MGPEG2 coded program channel has a bit rate of about 7 Mbps. Whether a local loop can transfer a channel to a CPE depends on the quality of the local loop; the quality being measured in terms of number of mega bits (Mbps) available on the local loop. There are two main types of noise that degrades the quality; cross talk and impulse noise. As mentioned above there are many DSLs, exemplary ten, that go to a IPDSLAM. These DSLs are bundled in binders at the CO and in the surroundings of the IPDSLAM. Close to the user (user area) the bundle is then forged to the individual users (drop-lines). An individual DSL in a bundle is subjected to cross talk from traffic on the other DSLs in the bundle. Impulse noise is generated in or in the vicinity of a customer's premises.

Look at the long line L1. Ideally it has a rate of about 14 Mbps if no noise is present. If cross talk only is present on L1 the cross talk penalty is about 8 Mbps and L1 has a rate of about 6 Mbps. In the illustrated case both cross talk and impulse noise are present. The impulse noise reduces the bandwidth with about 3 Mbps. To sum up the available rate of line L1 is about 3-4 Mbps as has been marked out at point 20. Since the line is quite long, the degradation of the rate due to impulse noise protection is small, i.e. the DSL framing does not constrain the data rate. For short loops, framing limitations in DSL provoke a hard limit on the data rate as shown by horizontal part of curve 18.

Since a channel requires about 7 Mbps to be transferred it is not possible to watch any channel at the CPE associated with L1 since the line can transfer only about 3-4 Mbps.

Now look at the 3 km long DSL line L2. Ideally it has a rate of about 20 Mbps, but in the example given, it is subjected to cross talk. Its cross talk penalty is about 8 Mbps and the rate of L3 is therefore only about 11-12 Mbps as indicated at point 21. L2 can therefore take at least one channel. If L2 also suffers from impulse noise protection, which kills about 6 Mbps, its rate would be only about 5-6 Mbps and the line would not be able to transport a single channel.

Finally, look at the short DSL line L3. It has an ideal rate of about 24 Mbps. If crosstalk but no impulse noise is present, the rate is limited to 23 Mbps as indicated by point 22. In this case, the available rate allows for transmission of two or even three channels. If now also impulse noise protection is enabled due to severe impulse noise on the line, the rate would drop to just 6 Mbps and no single channel would be possible on that line/noise combination.

Generally one can say that the longer the line is, the less the INP limits the rate, On short lines impulse noise gives the largest penalty and is problematic. Cross talk is largest at medium long lines.

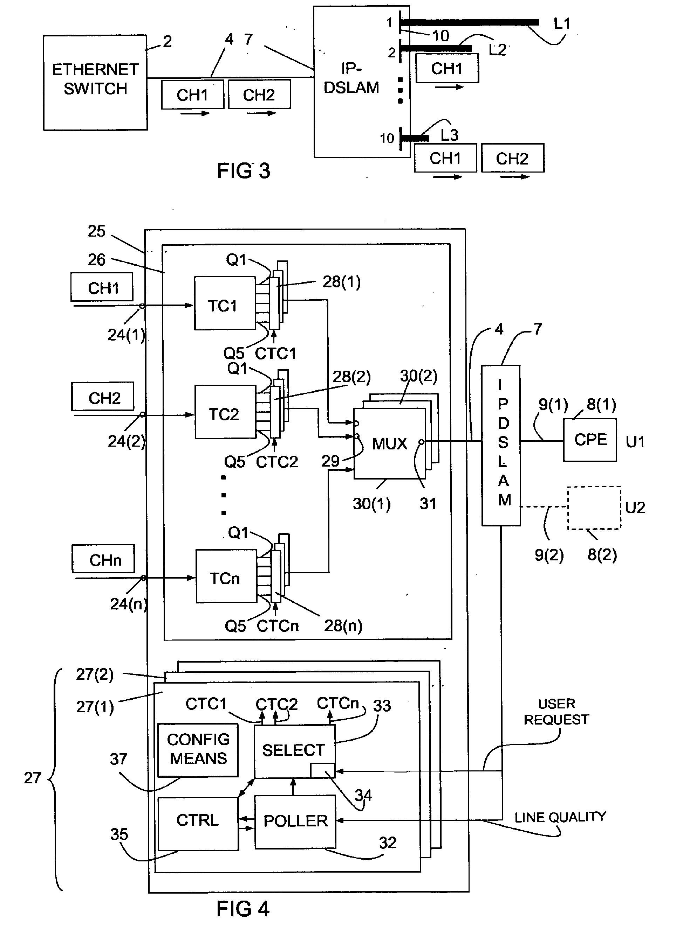

Fig. 3 depicts the situation with the three lines L1, L2 and L3 In Fig. 2 are connected to one IPDSLAM 7 which is connected to an Ethernet switch 2 or video server over the link 4.

Link 4 is for clarity reasons illustrated to carry only two channels CH1 and CH2 each one of 7 Mbps in bandwidth. The connectors are numbered from 1 to 10 in case the IPDSLAM supports 10 parallel DSLs. Typically link 4 carries about 30 channels and the ten users connected to the IPDSLAM can select any of these. With the examples given at points 20, 21 and 22 the CPE associated with L1 can not watch any channel, the CPE at L2 can watch CH1 or CH2, and the CPE at L3 can watch CH1 and CH2. The POTS service is available at all of the CPEs, since it is operated in a different frequency band.

There are two main problems associated with the prior art discussed above.

The first relates to connectivity. In the above example connectivity is lacking at the CPE associated with L1, since it is not possible to connect a program to the CPE associated with line L1.

The second relates to multichannel transmission. In the above example parallel transmission is not possible at the CPE associated with line L2; only one channel can be watched at the CPE associated with L2.

Other related art in the technical field is disclosed in US 2005/008074, which relates to a wireless video transmission system, in which multiple video streams are processed and wherein bit rates of multiple streams are adapted in case of competing traffic.

### SUMMARY

The present invention aims to ease the above mentioned problems.

The following numbered advantages [ADV1], [ADV2] etc. are achieved with the invention and in the detailed description below references are given to them in order to avoid repetitions.

[ADV1] An advantage achieved with the invention is that it is possible to transcode a channel to a lower rate compared to the source stream rate. This lower rate is selected so that the resulting stream fits the quality the bandwidth limited transport medium such as the DSL line. Thereby it will always be possible to connect/watch at least one channel with a reduced quality (IPTV connectivity).

[ADV2] Another advantage achieved with the invention is multichannel transmission to one and the same CPE. This is provided by transcoding a plurality of channels to different combinations of lower rates as compared to the rates of the source streams. These combinations are selected so that they fit the quality of the line they are transmitted on. One channel may be transmitted with the highest quality, while others are transmitted with reduced qualities. Other quality combinations are also possible. It is also possible to transcode and multiplex additional channels on the line.

[ADV3] By using statistical multiplexing it is even possible to code two or more channels together and transmit them either with a quality that is better than if each channel would be coded separately or with a rate that is lower than the sum of the individual rates.

[ADV4]: The basic principle behind the invention allows for inexpensive large-scale deployment in a public multi-media network.

### BRIEF DESCRIPTION OF THE DRAWINGS

Fig. 1 illustrates a traditional network for providing contents and POTS services to CPEs,
Fig. 2 is a diagram illustrating the loop length versus loop transmission rate for various types of noises on a DSL,
Fig. 3 is a schematic view of an IPSLAM with connected DSL lines of different qualities,
Fig. 4 is a block diagram of a stream adaptation device in accordance with the invention
Fig. 5 is a schematic view of two IPDSLAMs connected to respective stream adaptation devices provided in a node of a network,
Fig. 6 is a block diagram of a first embodiment of a transcoder unit in accordance with the invention, and
Fig. 7 is a block diagram of a second embodiment of a transcoder unit in accordance with the invention.

### DETAILED DESCRIPTION OF EMBODIMENTS

Fig. 4 is a block diagram of a stream adaptation device 25 in accordance with the invention. It comprises a general transcoder part 26 and a plurality of individual control units 27(1), 27(2) to 27(10), each one associated with a respective DSL line 9(1), 9(2) to 9(10) connected to the corresponding connector 10. For clarity reasons only DSL lines 9(1) and 9(2) and their respective control units 27(1) and 27(2) are shown.

The general transcoder part comprises a plurality of transcoder units TC1, TC2 to TCn, each one receiving a respective source stream 24(1), 24(2) to 24(n). Source stream 24(1) carries a program channel CH1, source stream 24(2) a channel CH2, and source stream 24(n) a channel CH(n). Exemplary n= 30 implying that there are 30 different program channels a user can select among.

A transcoder unit TC takes its source stream and transcodes it into a plurality of transcoded streams of lower, finite and configurable rates or qualities Q1-Q5. The transcoded streams appear simultaneously at a corresponding number of outputs at the TC. Exemplary each source stream is an MPEG2 coded stream with a rate of about 10 Mbps which is transcoded into 7 Mbps, 5 Mbps, 3 Mbps and 1 Mbps. At the output of each transcoder unit, the original source stream at 10 Mbps plus the four streams with rates 7, 5, 3 and 1 Mbps are available. It should be noted that these streams appear simultaneously in parallel at the outputs Q1-Q5. The stream at Q1 is the source stream with the highest quality Q1. At output Q2 the 7 Mbps transcoded stream appears and it has the next best quality Q2. Similarly the 5, 3 and 1 Mbps transcoded streams have the falling qualities Q3, Q4, and Q5 respectively. Q5 is thus the transcoded stream with the lowest ranked quality.

The Q1-Q5 outputs are connected to respective inputs of a stream quality multiplexer 28(1) that in response to a control signal CTC1 from the control unit 27(1) associated with DSL line 9 picks out the rate by which program channel CH1 shall be transmitted on DSL line 9.

Similarly the Q1-Q5 outputs of TC2 are connected to another stream quality multiplexer 28(2) that in response to another control signal CTC2 from the same control unit 27(1) associated with DSL line 9 picks out the rate by which program channel CH2 shall be transmitted on the same DSL line 9 to the CPE of a user, in the illustrated case DSL 9(1) to user U1.

In a similar manner, a plurality of different program channels at different rates are picked out at respective transcoder units TC3 to TCn, and the picked out streams are brought to inputs 29 of a channel multiplexer 30(1) which brings the picked out streams together at its output 31 and transmits them on link 4 to the IPDSLAM from where they are transmitted on DSL line 9 to user 1. In this manner user 1 can watch many programs with selected, different or similar, qualities Q, as determined by the respective control signals CTC1 to CTCn. These qualities Q have been selected by the control unit 27(1) and are of such rates that they in combination fit the quality of line 9; [Adv. 1], [Adv. 2]. How this is achieved will be described next.

First it is noted that an IPDSLAM comprises functionality that monitors the line conditions on the DSLs connected to it. Among other things the line conditions comprise information on the transmission rate that is currently used on each connected DSL in both directions. This information is stored in a non-shown MIB (Management Information Base) in the IPDSLAM. In accordance with the invention the line conditions associated to an individual DSL are used to adapt the rate of the streams that are transmitted on the individual DSL; [Adv. 1].

Retrieving means 32, exemplary a poller, fetches the line information associated to DSL 9 from the IPDSLAM and brings it to a selector 33 that comprises receiving means 34 for receiving a user's requests for transfer of individual program channels. Communication between the IPDSLAM and the retrieving means takes place using exemplary the SNMP (Simple Network Management Protocol).

A controller 35 receives the line information and the user's requests and calculates the rates that are possible to use for the requested program channels with respect to the current line quality on the individual DSL line 9. Exemplary the line is bad and can take only 5 Mbps in which case the controller suggests transfer of one channel with Q3 quality (5 Mbps), or one channel Q4 quality + one channel with Q5 quality (4 Mbps), or for example three channels all with Q5 quality (3 Mbps).

Exemplary the line is good, then the controller suggests transfer of three channels with Q2 quality, or one channel with Q1 quality and two with Q2 quality, or any other combination of channels and qualities; [Adv. 2].

There may be an interaction between the user and the controller in this phase, exemplary over a graphic interface at the PC of the user, and the user may select the options the controller suggests.

When the options for rates to be used on the DSL have been determined, either by the controller, the user or both, the controller communicates the rates to be used to the selector and the selector generates corresponding control signals to the involved stream quality multiplexers 28(1) to 28(n). A control signal will set a stream quality multiplexer, so that it lets through the transcoded/non-transcoded stream with the selected transcoding rate to its output.

The distribution of functionalites between the controller, the poller and the selector may be different than described. Exemplary, the selector functionality may be completely incorporated in the controller.

All of the streams generated within the same transcoder unit continues to be generated and are at disposal for use by other users connected to the same or other IPDSLAM. There is one channel multiplexer 28 per user, but just one TC1 to TCn per transcoder part 26.

Exemplary another user, user U2, has a CPE 8(2) that is connected to the same IPDSLAM 7 over DSL 9(2). User U2 may select any of the rates at any of transcoder units TC1- TCn and have the selected streams multiplexed in the MUX 30(2) associated with CPE 8(2). This CPE(2) and its DSL 9(2) are associated with their own control unit 27(2).

The individual control units 27(1) to 27(10) also comprise configuration means 37 for configuration of the transcoding rates at the transcoder units TC1 to TCn.

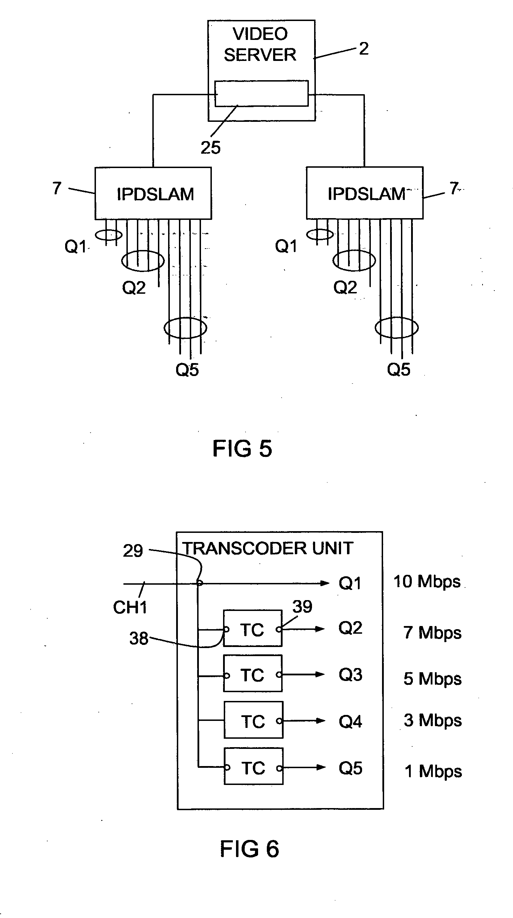

Refer to Fig. 5. In a unicast case in which a user can take a non-used stream transcoder unit, exemplary a CH1 stream of Q1 quality, another can take a CH2 stream of Q1 quality etcetera. This means that it is possible to reuse a lot of streams for a lot of users as is schematically illustrated at the ellipses Q1, Q2 and Q5.

Fig. 5 also illustrates the scalability of the stream adaptation device. Suppose the stream adaptation device 25 is located at the IPDSLAM 7, then the transcoder part 26 can serve the exemplary ten users connected to the IPDSLAM. If the transcoder unit is expensive it would be better to have it located one level higher in a hierarchical network of a video server network. Exemplary a video server at such a higher level may serves exemplary 24 IPDSLAMS. The transcoder part 26 would then serve 240 DSLs with no or minor changes in its structure. The number of control units 27 would increase correspondingly. If the transcoder part is placed even one level higher up in the video server hierarchy then it would serve even more DSLs with no or minor changes. Since the complexity of the transcoder part does not change with the number of CPEs it serves, the stream adaptation device in accordance with the invention is easy to scale in a cost efficient manner; [Adv. 4].

Still referring to Fig. 5 and to a multicast situation in which the stream adaptation device 25 is used. Suppose, for reasons of simplicity, the network in which it is used can offer two program channels CH1 and CH2. All of the users in the network can then watch either CH1 or CH2 and they can watch them on either Q1, Q2, Q3, Q4 or Q5 level. Streams are always generated in the transcoder units TC1 and TC2 and it is always possible to find streams at the server in which the transcoder part is sitting; [Adv. 1].

The channel multiplexer 30 may be a statistical MPEG multiplexer or a statistical multiplexer. The retrieving means 32, the selection means 33, the controller means 35 and the configuration means 37 may be implemented in software, hardware or combinations thereof. Likewise the transcoder units TC1 to TCn, the stream quality multiplexers, and the channel multiplexers 30(1) to 30(10) may be implemented in software, hardware or combinations thereof; [Adv. 3].

Fig. 6 illustrates a first embodiment of the transcoder unit. The transcoder unit comprises a plurality of transcoders, exemplary 4, each transcoding the source stream to a respective rate, exemplary 7, 5 3 and 1 Mbps. Each transcoder has an input 38 and an output 39. The inputs are all connected to the transcoder's input 29 on which the source stream is received. At the outputs the respective transcoded (downcoded) streams are available together with the 10 Mbps source stream.

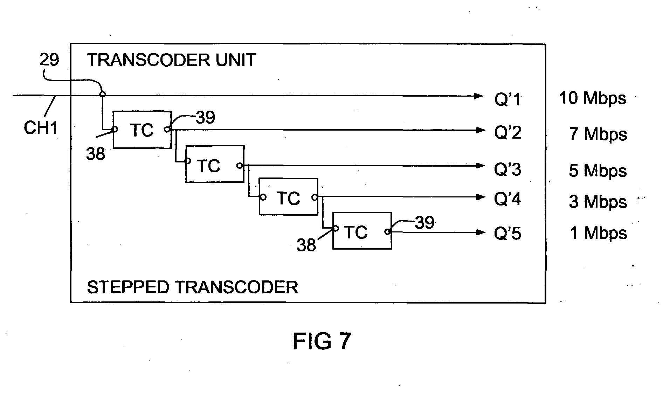

Fig. 7 illustrates a second embodiment of a transcoder unit comprising a plurality of transcoders, exemplary 4, each having an input 38 and an output 39. The source stream, exemplary CH1 at a rate of about 10 Mbps, is received at input 29 and is connected to the input of a first transcoder that transcodes the source stream into exemplary 7 Mbps. The source stream is also present at an output of the transcoder unit. The output of the first transcoder, that is the 7 Mbps stream, is connected to the input of a second transcoder that transcodes the 7 Mbps stream into exemplary 5 Mbps which in turn is transcoded into a stream of 3 Mbps etcetera. A so called stepped transcoder results and its outputs provide five different simultaneous streams at 10, 7, 5, 3, 1 Mbps each associated with a respective quality Q'1 to Q'5 which may differ from those achieved with the Fig. 6 embodiment. It should be noted that almost all MPEG specific parameters (group of picture, mode, etc.) can be affected and changed by the transcoding units.

Although the invention has been described with reference to DSLs and IPDSLAMs it should be understood it can be used for any access medium where the available data-rate is in the order of the stream data-rate and therefore limited (e.g. radio channel).

| | |
|---|---|
| [Ref. 1] | ITU-T G992.5, Asymmetric Digital Subscriber Line (ADSL) transceiver-Extended bandwidth ADSL2 (ADSL2plus), 05/2003 + Amendment 1 07/2005 |

## Claims

1. A stream adaptation device comprising a plurality of transcoding units (TC1 to TCn), wherein each transcoding unit (TC1 to TCn) comprises a plurality of transcoders (TC), each having an input (38) and an output (39), wherein the inputs (38) of the plurality of transcoders of each transcoding unit (TC1 to TCn) receive a respective source stream (24(1) to 24(n)) carrying a corresponding program channel (CH1 to CHn) and that the outputs (39) of the plurality of transcoders of each transcoding unit (TC1 to TCn) simultaneously and continuously provide a plurality of transcoder streams of different transcoding rates for use by different users, a channel multiplexer (30) with a plurality of inputs (29) and an output (31) the outputs of each transcoding unit (TC1 to TCn) being connected to a respective multiplexer input (29), retrieving means (32) for retrieving information relating to the quality of a bandwidth limited channel (9) over which the program channel is streamed to a customer premises equipment, CPE (8), selecting means (33) comprising user-request means (34) for receiving a user request for a program channel, said program channel being carried by a source stream, the selecting means being in communication with a controller (35), the controller adapted to calculate which ones of the different transcoding rates that fit the quality of the bandwidth limited channel based on the received user request, and to communicate the calculated transcoding rates to the selecting means for selection of the transcoder streams corresponding to the calculated transcoding rates, and the multiplexer output (31) being adapted for connection to the bandwidth limited channel (9) so as to allow for simultaneous transfer of at least two program channels over the same bandwidth limited channel (9), said channel multiplexer supporting the CPE of the different users.

2. A stream adaptation device in accordance with claim 1, wherein the selection means (33) is adapted to receive from one and the same user a request for transfer of two or more simultaneous program channels.

3. A stream adaptation device in accordance with claim 2, wherein the controller (35) in response to a request for transfer of two or more simultaneous program channels (CH1 to CHn) is adapted to calculate which of said plurality of transcoding rates that are possible to use for simultaneous transmission of the requested program channels on the bandwidth-limited channel (9).

4. A stream adaptation device in accordance with claim 3, wherein the controller (35) is adapted to interact with the user (U1) and to propose transcoding rates that are possible to use for the different program channels that are to be transferred simultaneously on the bandwidth-limited channel.

5. A stream adaptation device in accordance with claim 4, wherein each transcoding unit (TC1 to TCn) comprises a stepped transcoder; a stepped transcoder in turn comprising a plurality of transcoders (TC) each having an input (38) and an output (39), the input of a transcoder at one step being connected to the output of a transcoder at a higher step, and the output of the transcoder at said step being connected to the input of an immediate lower step, the transcoder at the highest step receiving a source stream (24(1) to 24(n)) and the outputs of each transcoder providing the different transcoding rates.

6. A stream adaptation device in accordance with any of claims 1-5, comprising means (37) for configuration of the transcoding rates.

7. A stream adaptation device in accordance with claim 6, wherein the bandwidth limited channel is a digital subscriber lineDSL.

8. A stream adaptation device in accordance with claim 7, wherein an IP digital subscriber line multiplexer IPDSLAM (7) is connected to the DSL, and in that there is one channel multiplexer (3) per IPDSLAM.

9. A stream adaptation device in accordance with claim 7, using the Simple Network Management Protocol, SNMP for communication between the selection means (33) and the IPDSLAM (7).

10. A stream adaptation device in accordance with claim 1, wherein said retrieving means (32) is adapted to poll a management information base, MIB comprising information on the quality of the bandwidth limited channel (9) and to receive information of the line quality.

11. A stream adaptation device in accordance with claim 1, wherein the stream adaptation device is located at a content server, a video server, or at an Ethernet switch (2).

12. A stream adaptation device in accordance with any of claims 1 to 11, wherein the bandwidth-limited channel (9) is a radio connection between a cellular phone and a base station.

13. A stream adaptation device in accordance with claim 1, wherein the bandwidth limited channel is an optical fibre.

14. A stream adaptation device in accordance with claim 1, using the bit error rate as a measure of the quality of the radio connection.

15. A network node for adapting the rate by which one or more source streams (24(1) to 24(n)) are transmitted on a bandwidth limited channel (9), wherein the node comprises a device in accordance with claim 1.

16. A network node in accordance with claim 15, wherein the node is a content server, a video server or an Ethernet switch (2).

## Patentansprüche

1. Stream-Anpassungsvorrichtung, umfassend eine Mehrzahl von Transcodiereinheiten (TC1 bis TCn), wobei jede Transcodiereinheit (TC1 bis TCn) eine Mehrzahl von Transcodern (TC) umfasst, die jeweils einen Eingang (38) und einen Ausgang (39) aufweisen, wobei die Eingänge (38) der Mehrzahl von Transcodern jeder Transcodiereinheit (TC1 bis TCn) einen jeweiligen Quell-Stream (24(1) bis 24(n)) empfangen, der einen entsprechenden Programmkanal (CH1 bis CHn) mitführt, und die Ausgänge (39) der Mehrzahl von Transcodern jede Transcodiereinheit (TC1 bis TCn) gleichzeitig und kontinuierlich eine Mehrzahl von Transcoderstreams von verschiedenen Transcodierraten zur Verwendung durch verschiedene Benutzer bereitstellt, einen Kanalmultiplexer (30) mit einer Mehrzahl von Eingängen (29) und einem Ausgang (31), wobei die Ausgänge jeder Transcodiereinheit (TC1 bis TCn) mit einem jeweiligen Multiplexereingang (29) verbunden sind, Abrufmittel (32) zum Abrufen von Informationen in Bezug auf die Qualität eines Kanals mit begrenzter Bandbreite (9), über welchen der Programmkanal zu einer Teilnehmereinrichtung, CPE (8), gestreamt wird, Auswählmittel (33), welche Benutzeranforderungsmittel (34) umfassen, zum Empfangen einer Benutzeranforderung für einen Programmkanal, wobei der Programmkanal durch einen Quell-Stream mitgeführt wird, die Auswählmittel mit einer Steuerung (35) in Kommunikation sind, wobei die Steuerung so ausgelegt ist, dass sie basierend auf der empfangenen Benutzeranforderung welche von den verschiedenen Transcodierraten berechnet, die der Qualität des Kanals mit begrenzter Bandbreite entsprechen, und die berechneten Transcodierraten an die Auswählmittel zur Auswahl der Transcoderstreams kommuniziert, die den berechneten Transcodierraten entsprechen, und der Multiplexerausgang (31) zur Verbindung mit dem Kanal mit begrenzter Bandbreite (9) ausgelegt ist, um simultane Übertragung von mindestens zwei Programmkanälen über den gleichen Kanal mit begrenzter Bandbreite (9) zu ermöglichen, wobei der Kanalmultiplexer die CPE der verschiedenen Benutzer unterstützt.

2. Stream-Anpassungsvorrichtung nach Anspruch 1, wobei das Auswahlmittel (33) so ausgelegt ist, dass es von ein und demselben Benutzer eine Anforderung zur Übertragung von zwei oder mehr simultanen Programmkanälen empfängt.

3. Stream-Anpassungsvorrichtung nach Anspruch 2, wobei die Steuerung (35) so ausgelegt ist, dass sie als Antwort auf eine Anforderung zur Übertragung von zwei oder mehr simultanen Programmkanälen (CH1 bis CHn) welche der Mehrzahl von Transcodierraten berechnet, die zur Verwendung für simultane Übertragung der angeforderten Programmkanäle auf dem Kanal mit begrenzter Bandbreite (9) möglich sind.

4. Stream-Anpassungsvorrichtung nach Anspruch 3, wobei die Steuerung (35) so ausgelegt ist, dass sie mit dem Benutzer (UI) interagiert und Transcodierraten vorschlägt, die zur Verwendung für die verschiedenen Programmkanäle möglich sind, die auf dem Kanal mit begrenzter Bandbreite simultan übertragen werden sollen.

5. Stream-Anpassungsvorrichtung nach Anspruch 4, wobei jede Transcodiereinheit (TC1 bis TCn) einen Stufentranscoder umfasst; ein Stufentranscoder wiederum eine Mehrzahl von Transcodern (TC) umfasst, die jeweils einen Eingang (38) und einen Ausgang (39) aufweisen, wobei der Eingang eines Transcoders auf einer Stufe mit dem Ausgang eines Transcoders auf einer höheren Stufe verbunden ist, und der Ausgang des Transcoders auf der Stufe mit dem Eingang auf einer unmittelbar niedrigeren Stufen verbunden ist, der Transcoder auf der höchsten Stufe einen Quell-Stream (24(1) bis 24(n)) empfängt, und die Ausgänge jedes Transcoders die verschiedenen Transcodierraten bereitstellen.

6. Stream-Anpassungsvorrichtung nach einem der Ansprüche 1 bis 5, umfassend Mittel (37) zur Konfiguration der Transcodierraten.

7. Stream-Anpassungsvorrichtung nach Anspruch 6, wobei der Kanal mit begrenzter Bandbreite eine digitale Teilnehmerleitung, DSL, ist.

8. Stream-Anpassungsvorrichtung nach Anspruch 7, wobei ein IP-Digital-Teilnehmerleitungs-Multiplexer, IPDSLAM (7), mit der DSL verbunden ist, und wobei es einen Kanalmultiplexer (3) pro IPDSLAM gibt.

9. Stream-Anpassungsvorrichtung nach Anspruch 7, welche das einfache Netzverwaltungsprotokoll, SNMP, zur Kommunikation zwischen den Auswahlmitteln (33) und dem IPDSLAM (7) verwendet.

10. Stream-Anpassungsvorrichtung nach Anspruch 1, wobei das Abrufmittel (32) so ausgelegt ist, dass es eine Verwaltungsinformationsbasis, MIB, abfragt, welche Informationen über die Qualität des Kanals mit begrenzter Bandbreite (9) umfasst, und Informationen über die Leitungsqualität empfängt.

11. Stream-Anpassungsvorrichtung nach Anspruch 1, wobei sich die Stream-Anpassungsvorrichtung an einem Inhaltsserver, einem Videoserver oder an einem Ethernet-Switch (2) befindet.

12. Stream-Anpassungsvorrichtung nach einem der Ansprüche 1 bis 11, wobei der Kanal mit begrenzter Bandbreite (9) eine Funkverbindung zwischen einem Zellulartelefon und einer Basisstation ist.

13. Stream-Anpassungsvorrichtung nach Anspruch 1, wobei der Kanal mit begrenzter Bandbreite eine Glasfaser ist.

14. Stream-Anpassungsvorrichtung nach Anspruch 1, welche die Bitfehlerrate als ein Maß der Qualität der Funkverbindung verwendet.

15. Netzknoten zum Anpassen der Rate, mit welcher ein oder mehrere Quell-Streams (24(1) bis 24(n)) auf einem Kanal mit begrenzter Bandbreite (9) gesendet werden, wobei der Knoten eine Vorrichtung nach Anspruch 1 umfasst.

16. Netzknoten nach Anspruch 15, wobei der Knoten ein Inhaltsserver, ein Videoserver oder ein Ethernet-Switch (2) ist.

## Revendications

1. Dispositif d'adaptation de flux comprenant une pluralité d'unités de transcodage (TC1 à TCn), dans lequel chaque unité de transcodage (TC1 à TCn) comprend une pluralité de transcodeurs (TC), ayant chacun une entrée (38) et une sortie (39), où les entrées (38) de la pluralité de transcodeurs de chaque unité de transcodage (TC1 à TCn) reçoivent un flux source respectif (24(1) à 24(n)) portant un canal de programme correspondant (CH1 à CHn) et où les sorties (39) de la pluralité de transcodeurs de chaque unité de transcodage (TC1 à TCn) fournissent simultanément et de manière continu une pluralité de flux de transcodeurs de différentes vitesses de transcodage pour une utilisation par différents utilisateurs, un multiplexeur de canaux (30) avec une pluralité d'entrées (29) et une sortie (31), les sorties de chaque unité de transcodage (TC1 à TCn) étant connectées à une entrée de multiplexeur respective (29), un moyen de récupération (32) pour récupérer des informations relatives à la qualité d'un canal limité en largeur de bande (9) sur lequel le canal de programme est diffusé en continu à un équipement des locaux d'abonné CPE (8), un moyen de sélection (33) comprenant un moyen de demande d'utilisateur (34) pour recevoir une demande d'utilisateur pour un canal de programme, ledit canal de programme étant porté par un flux source, le moyen de sélection étant en communication avec un dispositif de commande (35), le dispositif de commande étant adapté pour calculer lesquelles parmi différentes vitesses de transcodage correspondent à la qualité du canal limité en largeur de bande sur la base de la demande d'utilisateur reçue, et pour communiquer les vitesses de transcodage calculées au moyen de sélection pour sélectionner les flux de transcodeur correspondant aux vitesses de transcodage calculées, et la sortie du multiplexeur (31) étant adaptée pour une connexion avec le canal limité en largeur de bande (9) de manière à permettre un transfert simultané d'au moins deux canaux de programme sur le même canal limité en largeur de bande (9), ledit multiplexeur de canaux supportant le CPE des différents utilisateurs.

2. Dispositif d'adaptation de flux selon la revendication 1, dans lequel le moyen de sélection (33) est adapté pour recevoir à partir d'un seul et même utilisateur une demande pour transférer deux ou plus de deux canaux de programme simultanés.

3. Dispositif d'adaptation de flux selon la revendication 2, dans lequel le dispositif de commande (35) en réponse à une demande de transfert de deux ou plus de deux canaux de programme simultanés (CH1 à CHn) est adapté pour calculer lesquelles parmi ladite pluralité de vitesses de transcodage sont possibles à utiliser pour la transmission simultanée des canaux de programme demandés sur le canal limité en largeur de bande (9).

4. Dispositif d'adaptation de flux selon la revendication 3, dans lequel le dispositif de commande (35) est adapté pour interagir avec l'utilisateur (U1) et pour proposer des vitesses de transcodage qui sont possibles à utiliser pour les différents canaux de programme qui doivent être transférés simultanément sur le canal limité en largeur de bande.

5. Dispositif d'adaptation de flux selon la revendication 4, dans lequel chaque unité de transcodage (TC1 à TCn) comprend un transcodeur étagé ; un transcodeur étagé à son tour comprenant une pluralité de transcodeurs (TC) ayant chacun une entrée (38) et une sortie (39), l'entrée d'un transcodeur à un étage étant connectée à la sortie d'un transcodeur à un étage supérieur, et la sortie du transcodeur audit étage étant connectée à l'entrée d'un étage immédiatement inférieur, le transcodeur à l'étage le plus élevé recevant un flux source (24(1) à 24(n)), et les sorties de chaque transcodeur fournissant les différentes vitesses de transcodage.

6. Dispositif d'adaptation de flux selon l'une des revendications 1 à 5, comprenant un moyen (37) pour la configuration des vitesses de transcodage.

7. Dispositif d'adaptation de flux selon la revendication 6, dans lequel le canal limité en largeur de bande est une ligne d'abonné numérique, DSL.

8. Dispositif d'adaptation de flux selon la revendication 7, dans lequel un multiplexeur de ligne d'abonné numérique IP, IPDSLAM, (7) est connecté à la DSL ; et un seul multiplexeur de canaux (3) par IPDSLAM est prévu.

9. Dispositif d'adaptation de flux selon la revendication 7, utilisant le protocole simple de gestion de réseau, SNMP, pour une communication entre le moyen de sélection (33) et l'IPDSLAM (7).

10. Dispositif d'adaptation de flux selon la revendication 1, dans lequel ledit moyen de récupération (32) est adapté pour interroger une base d'informations de gestion, MIB, comprenant des informations sur la qualité du canal limité en largeur de bande (9) et pour recevoir des informations de la qualité de ligne.

11. Dispositif d'adaptation de flux selon la revendication 1, le dispositif d'adaptation de flux étant situé au niveau d'un serveur de contenu, d'un serveur vidéo, ou au niveau d'un commutateur Ethernet (2).

12. Dispositif d'adaptation de flux selon l'une des revendications 1 à 11, dans lequel le canal limité en largeur de bande (9) est une connexion radio entre un téléphone cellulaire et une station de base.

13. Dispositif d'adaptation de flux selon la revendication 1, dans lequel le canal limité en largeur de bande est une fibre optique.

14. Dispositif d'adaptation de flux selon la revendication 1, utilisant le taux d'erreur binaire en tant que mesure de la qualité de la connexion radio.

15. Noeud de réseau permettant d'adapter la vitesse avec laquelle un ou plusieurs flux sources (24(1) à 24(n)) sont transmis sur un canal limité en largeur de bande (9), le noeud comprenant un dispositif selon la revendication 1.

16. Noeud de réseau selon la revendication 15, le noeud étant un serveur de contenu, un serveur vidéo ou un commutateur Ethernet (2).
